# EUROPÄISCHE PATENTANMELDUNG

(11) **EP 3 767 135 A1**
(43) Veröffentlichungstag der Anmeldung: **20.01.2021**
(21) Anmeldenummer: 20186260.4
(22) Anmeldetag: 16.07.2020
(51) Int. Cl.: F16H 57/04

(54) **GETRIEBE, INSBESONDERE KRAFTFAHRZEUGGETRIEBE**

(30) Priorität: 17.07.2019 DE 102019210512
(71) Anmelder: ZF Friedrichshafen AG, 88046 Friedrichshafen (DE)
(72) Erfinder: Pfeffer, Andreas, 94505 Bernried (DE)

(57) **Zusammenfassung**

Die Erfindung betrifft ein Getriebe (1), insbesondere ein Kraftfahrzeuggetriebe, umfassend zumindest eine Stirnradstufe (6), bei welcher Stirnräder (15, 16, 17) an Verzahnungen miteinander im Zahneingriff stehen. Eines der Stirnräder (15) nimmt bei Drehbewegung an seiner Verzahnung Schmiermittel auf und transportiert es zu dem Zahneingriff mit dem anderen Stirnrad (16), wobei die Stirnräder (15, 16) bei Drehbewegung das Schmiermittel durch den Zahneingriff in ein Schmiermittelversorgungssystem (22) verdrängen. Um nun stets eine zuverlässige Förderung zu gewährleisten, sind beidseitig des Zahneingriffs Förderkanäle (39, 40) des Schmiermittelversorgungssystems (22) vorgesehen, wobei die Stirnräder (15, 16) das Schmiermittel drehrichtungsabhängig in je einen der Förderkanäle (39; 40) verdrängen.

## Beschreibung

Die Erfindung betrifft ein Getriebe, insbesondere ein Kraftfahrzeuggetriebe, umfassend zumindest eine Stirnradstufe, bei welcher Stirnräder an Verzahnungen miteinander im Zahneingriff stehen, wobei eines der Stirnräder bei Drehbewegung an seiner Verzahnung Schmiermittel aufnimmt und zu dem Zahneingriff mit dem anderen Stirnrad transportiert, und wobei die Stirnräder bei Drehbewegung das Schmiermittel durch den Zahneingriff in ein Schmiermittelversorgungssystem verdrängen. Des Weiteren betrifft die Erfindung einen Antriebsstrang, in welchem ein vorgenanntes Getriebe vorgesehen ist.

Bei Getrieben werden zu schmierende und zu kühlende Komponenten, wie beispielsweise Lagerstellen, üblicherweise durch Umlaufschmierung mit Schmiermittel versorgt. Dazu sind die entsprechenden Komponenten an ein Schmiermittelversorgungssystem des Getriebes angebunden, über welches gezielt Schmiermittel in die entsprechenden Bereiche geführt wird. Innerhalb des Systems wird dabei das Schmiermittel aus einem Reservoir entnommen und über eine Pumpe entsprechend zu den jeweiligen Bereichen gefördert. Eine gängige Ausführung einer Pumpe ist dabei unter anderem ein Außenzahnradpumpe, wobei auch Systeme bekannt sind, bei welchen die Außenzahnradpumpe durch eine Stirnradstufe des Getriebes gebildet ist.

Aus der DE 102 23 927 A1 geht ein Getriebe hervor, welches eine Stirnradstufe umfasst, deren schrägverzahnte Stirnräder an Verzahnungen miteinander im Zahneingriff stehen. Zudem gelangt eines der Stirnräder an seiner Verzahnung mit Schmiermittel in Kontakt und fördert dieses zu dem Zahneingriff mit dem anderen Stirnrad, wobei die Stirnradstufe dabei so von Gehäuseelementen umgeben ist, dass das Schmiermittel im Bereich des Zahneingriffs zwischen den ineinandergreifenden Zähnen eingeschlossen und in ein Schmiermittelversorgungssystem verdrängt wird.

Ausgehend vom vorstehend beschriebenen Stand der Technik ist es nun die Aufgabe der vorliegenden Erfindung, ein Getriebe zu schaffen, bei welchem eine Stirnradstufe zur Förderung von Schmiermittel als Außenzahnradpumpe herangezogen wird und dabei stets eine zuverlässige Förderung gewährleistet ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Antriebsstrang, in welchem ein vorgenanntes Getriebe vorgesehen ist, ist zudem Gegenstand von Anspruch 9.

Gemäß der Erfindung umfasst ein Getriebe zumindest eine Stirnradstufe, bei welcher Stirnräder an Verzahnungen miteinander im Zahneingriff stehen. Dabei nimmt eines der Stirnräder bei Drehbewegung an seiner Verzahnung Schmiermittel auf und transportiert das Schmiermittel zu dem Zahneingriff mit dem anderen Stirnrad, wobei die Stirnräder bei Drehbewegung das Schmiermittel durch den Zahneingriff in ein Schmiermittelversorgungssystem verdrängen. Bei dem erfindungsgemäßen Getriebe ist also zumindest eine Stirnradstufe vorgesehen, die als Außenzahnradpumpe fungiert. Dies wird dabei dadurch erreicht, indem eines der Stirnräder der Stirnradstufe Schmiermittel an seiner Verzahnung aufnimmt und zum Zahneingriff mit dem anderen Stirnrad fördert, wo die Stirnräder gemeinsam durch den Zahneingriff das hierhin transportierte Schmiermittel in ein Schmiermittelversorgungssystem verdrängen.

Im Sinne der Erfindung umfasst das Getriebe bevorzugt mehrere Stirnradstufen, von welchen mindestens eine Stirnradstufe gleichzeitig die Funktion einer Pumpe des Schmiermittelversorgungssystems übernimmt. Bei dieser Stirnradstufe können dabei zwei oder auch mehrere Stirnräder miteinander im Zahneingriff stehen, wobei zwei dieser Stirnräder dann gemeinsam als Außenzahnradpumpe fungieren. So ist es im Rahmen der Erfindung denkbar, dass das eine Stirnrad das Schmiermittel von dem Zahneingriff mit einem anderen Stirnrad erhält und dann zu dem Zahneingriff mit dem jeweils anderen Stirnrad transportiert, wo dann das Verdrängen des Schmiermittels in das Schmiermittelversorgung System stattfindet. Bei dem Getriebe handelt es sich hierbei bevorzugt um ein Kraftfahrzeuggetriebe, bei welchem eine Kraftflussführung über Stirnradstufen stattfindet. Bei der Stirnradstufe, die die Funktion einer Außenzahnradpumpe übernimmt, findet dabei bei Betrieb des Getriebes permanent eine Kraftflussführung statt, um auch stets eine Förderung von Schmiermittel in das Schmiermittelversorgungssystem zu garantieren.

Die Erfindung umfasst nun die technische Lehre, dass beidseitig des Zahneingriffs Förderkanäle des Schmiermittelversorgungssystems vorgesehen sind, wobei die Stirnräder das Schmiermittel drehrichtungsabhängig in je einen der Förderkanäle verdrängen. Mit anderen Worten münden also beidseitig des Zahneingriffs Kanäle des Schmiermittelversorgungssystems, welche jeweils einer Aufnahme des durch den Zahneingriff der Stirnräder verdrängten Schmiermittels dienen. Dabei wird in Abhängigkeit der Drehrichtungen der gegensinnig rotierenden Stirnräder das geförderte Schmiermittel entweder in den einen oder in den anderen Förderkanal verdrängt.

Eine derartige Ausgestaltung eines Getriebes hat dabei den Vorteil, dass somit eine zuverlässige Förderung von Schmiermittel über die Stirnradstufe auch dann stattfinden kann, wenn das Getriebe mit unterschiedlichen Drehrichtungen betreibbar ist. Denn bei Betrieb des Getriebes in der einen Drehrichtung fördert die Stirnradstufe Schmiermittel in den einen Förderkanal, während bei einer hierzu entgegengesetzten Drehrichtung ein Verdrängen in den jeweils anderen Förderkanal stattfindet. Hierdurch ist auch bei einem Getriebe, bei welchem Antriebsbewegungen mit zwei unterschiedlichen Drehrichtungen eingeleitet werden können, stets eine zuverlässige Versorgung eines Schmiermittelversorgungssystems mit Schmiermittel gewährleistet.

Damit, dass die Förderkanäle "beidseitig" des Zahneingriffs der Stirnräder vorgesehen sind, ist im Sinne der Erfindung gemeint, dass die Förderkanäle jeweils in je einer der beiden Fördererrichtungen liegen, welche durch die gegensinnige Drehbewegung der Stirnräder der als Außenzahnradpumpe arbeitenden Stirnradstufe jeweils definiert werden.

Bei dem Getriebe der DE 102 23 927 A1 kann die Stirnradstufe hingegen nur in einer Drehrichtung Schmiermittel in das Schmiermittelversorgungssystem fördern, da nur ein Förderkanal zur Aufnahme des Schmiermittels vorgesehen ist. Werden bei dem Getriebe dagegen Antriebsbewegung mit unterschiedlichen Drehrichtungen eingeleitet, so findet in einer Drehrichtung keine Förderung des Schmiermittels in das Schmiermittelversorgungssystem statt.

Entsprechend einer Ausführungsform der Erfindung laufen die Förderkanäle in einem Hauptkanal des Schmiermittelversorgungssystems zusammen. Das Schmiermittel wird also einem zentralen Kanal zugeführt, egal in welchen der Förderkanäle gerade Schmiermittel verdrängt wird. In Weiterbildung dieser Ausführungsform ist zwischen dem jeweiligen Förderkanal und dem Hauptkanal je ein Rückschlagventil vorgesehen, welches ein Strömen des Schmiermittels aus dem jeweiligen Förderkanal in den Hauptkanal zulässt und ein Rückströmen des Schmiermittels aus dem Hauptkanal in den jeweiligen Förderkanal unterbindet. Eine derartige Ausgestaltung hat dabei den Vorteil, dass somit eine zuverlässige Versorgung des Hauptkanals mit Schmiermittel aus den beiden Förderkanälen stattfinden kann. Durch Vorsehen der Rückschlagventile wird dabei ein ungewolltes Zurückströmen des Schmiermittels in den Förderkanal unterbunden, in welchen gerade kein Schmiermittel verdrängt wird.

Gemäß einer weiteren alternativen oder auch ergänzenden Variante der vorgenannten Ausführungsform führt der Hauptkanal zu einem Verteiler des Schmiermittelversorgungssystems, welcher über je eine Versorgungsleitung mit zumindest einer zugeordneten, mit Schmiermittel zu versorgenden Komponente verbunden ist. Es findet also über den Hauptkanal eine Förderung des über die Stirnradstufe bereitgestellten Schmiermittels in einen Bereich statt, von welchem ausgehend dann eine Verteilung auf eine, insbesondere aber mehrere zu schmierenden und zu kühlenden Komponenten des Getriebes erfolgt.

In Weiterbildung der vorgenannten Variante ist der Verteiler innerhalb des Schmiermittelversorgungssystems dann noch mit einem weiteren Verteiler verbunden, welcher ebenfalls über je eine Versorgungsleitung mit mindestens einer zugeordneten, mit Schmiermittel zu versorgenden Komponente verbunden ist. So sind in diesem Fall bei dem Getriebe mehrere Verteiler vorgesehen, die einer Verteilung des Schmiermittels auf unterschiedliche Komponenten dienen. Bei den Komponenten kann es sich im Rahmen der Erfindung dabei insbesondere um Lagerstellen des Getriebes, Zahneingriffe von Übersetzungsstufen oder Ähnliches handeln. Zudem kann zwischen den Verteilern ein Rückschlagventil vorgesehen sein, um ein Strömen von Schmiermittel nur in einer Richtung zuzulassen.

Entsprechend einer vorteilhaften Ausgestaltungsmöglichkeit der Erfindung taucht das das Schmiermittel aufnehmende Stirnrad mit seiner Verzahnung in ein Schmiermittelreservoir ein. In diesem Fall nimmt also das eine Stirnrad der Stirnradstufe dadurch das Schmiermittel auf, indem es mit seiner Verzahnung in das im Schmiermittelreservoir stehende Schmiermittel eintaucht. Alternativ dazu ist es im Rahmen der Erfindung aber auch denkbar, dass dem Stirnrad das Schmiermittel über ein weiteres, mit dem einen Stirnrad im Zahneingriff stehendes Stirnrad zugeführt wird, welches seinerseits mit der Verzahnung in ein Schmiermittelreservoir eintauchen kann.

In Weiterbildung der Erfindung ist die Stirnradstufe zumindest im Bereich des Zahneingriffs eingehaust. Es sind also zumindest in diesem Bereich ein oder mehrere Gehäuseteile vorgesehen, welche neben dem Verdrängen des Schmiermittels in die Förderkanäle ein anderweitiges Entweichen des Schmiermittels in den Innenbereich des Getriebes unterbinden.

Gemäß einer weiteren Ausführungsform der Erfindung sind die Stirnräder mit Schrägverzahnungen versehen. Hierdurch wird eine hohe Laufruhe des Getriebes erreicht.

Das erfindungsgemäße Getriebe ist insbesondere Teil eines Antriebsstranges, bei welchem es sich bevorzugt um einen Kraftfahrzeugantriebsstrang handelt. Dabei liegt das Getriebe insbesondere als Hauptgetriebe dieses Antriebsstranges vor.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Ansicht eines Teils eines Getriebes entsprechend einer ersten Ausführungsform der Erfindung;
- Fig. 2: eine Schnittansicht eines Bereichs des Getriebes aus Fig. 1; und
- Fig. 3: eine schematische Darstellung eines Teils eines Getriebes gemäß einer zweiten Ausgestaltungsmöglichkeit der Erfindung.

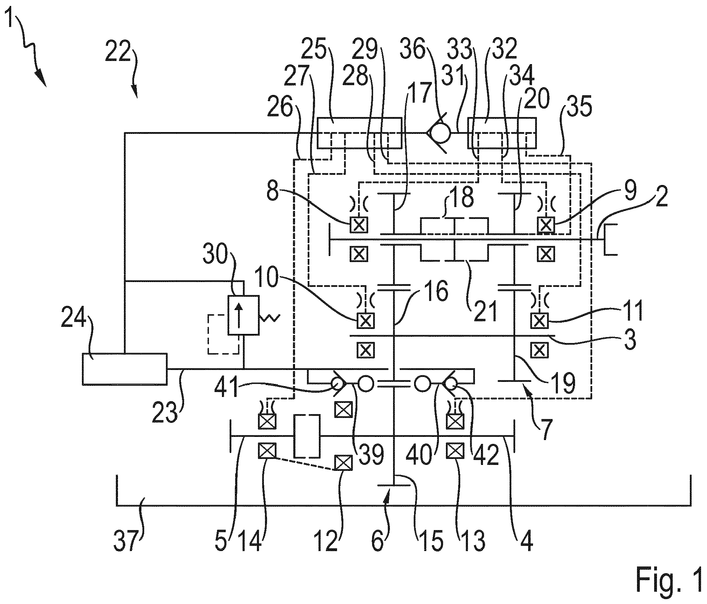

Aus Fig. 1 geht eine schematische Ansicht eines Teils eines Getriebes 1 hervor, bei welchem es sich insbesondere um ein Kraftfahrzeuggetriebe handelt und das gemäß einer ersten Ausführungsform der Erfindung ausgebildet ist. Dabei weist das Getriebe 1 im Bereich des dargestellten Teils vier Wellen 2, 3, 4 und 5 sowie zwei Stirnradstufen 6 und 7 auf, wobei das Getriebe 1 im Rahmen der Erfindung über weitere Wellen und insbesondere auch weitere Stirnradstufen verfügen kann.

Vorliegend ist die Welle 2 über zwei Lagerstellen 8 und 9 drehbar gelagert, wobei achsparallel zu der Welle 2 die Welle 3 angeordnet ist, welche über Lagerstellen 10 und 11 drehbar gelagert ist. Wiederum zu der Welle 3 sind die Wellen 4 und 5 achsparallel vorgesehen, von welchen die Welle 4 über die Lagerstellen 12 und 13 drehbar gelagert ist, während eine Lagerung der Welle 5 über die Lagerstelle 14 stattfindet.

Wie in Fig. 1 zu erkennen ist, setzt sich die Stirnradstufe 6 aus drei schrägverzahnten Stirnrädern 15, 16 und 17 zusammen, von welchen das Stirnrad 15 als Festrad drehfest auf der Welle 4 vorgesehen ist und permanent mit dem Stirnrad 16 im Zahneingriff steht. Das Stirnrad 16 ist als Festrad drehfest auf der Welle 3 platziert und steht neben dem Stirnrad 15 auch noch ständig mit dem Stirnrad 17 im Zahneingriff, welches als Losrad drehbar auf der Welle 2 gelagert ist. Dabei kann das Stirnrad 17 durch Betätigen eines Schaltelements 18 an der Welle 2 festgesetzt werden, so dass eine Koppelung der Wellen 2, 3 und 4 über die Stirnräder 15 bis 17 der Stirnradstufe 6 stattfindet.

Zwischen der Welle 2 und der Welle 3 ist außerdem noch die Stirnradstufe 7 vorgesehen, die sich aus einem Stirnrad 19 und einem Stirnrad 20 zusammensetzt. Von den schrägverzahnten Stirnrädern 19 und 20 ist dabei das Stirnrad 19 als Festrad drehfest auf der Welle 3 platziert und kämmt permanent mit dem Stirnrad 20, welches als Losrad drehbar auf der Welle 2 gelagert ist. Das Stirnrad 20 kann über ein Schaltelement 21 an der Welle 2 festgesetzt werden, so dass die Stirnradstufe 7 in der Folge die Welle 3 und die Welle 2 miteinander koppelt.

Das Getriebe 1 verfügt außerdem über ein Schmiermittelversorgungssystem 22, in welchem Schmiermittel über einen Hauptkanal 23 und einen Kühler 24 zu einem Verteiler 25 geführt wird, wobei über den Verteiler 25 eine Verteilung des Schmiermittels über Versorgungsleitungen 26, 27, 28 und 29 auf die Lagerstellen 14, 10, 11 und 13 stattfindet. Parallel zu dem Kühler 24 ist dabei im Hauptkanal 23 zudem ein Überdruckventil 30 vorgesehen, über welches das Schmiermittel bei Überschreiten eines definierten Drucks am Kühler 24 vorbei zum Verteiler 25 geführt wird.

Der Verteiler 25 steht außerdem über eine Verbindungsleitung 31 mit einem weiteren Verteiler 32 in Verbindung, an welchem Versorgungsleitungen 33, 34 und 35 angebunden sind. Dabei findet über die Versorgungsleitungen 33, 34 und 35 eine Verteilung des dem Verteiler 32 zugeführten Schmiermittels auf die Lagerstellen 8 und 9 sowie Lagerungen der Stirnräder 17 und 20 statt. In der Verbindungsleitung 31 ist zudem ein Rückschlagventil 36 vorgesehen, über welches zwar ein Strömen von Schmiermittel aus dem Verteiler 25 in den Verteiler 32 ermöglicht wird, ein Rückströmen des Schmiermittels aus dem Verteiler 32 in den Verteiler 25 aber unterbunden wird.

Eine Zuführung des Schmiermittels zum Schmiermittelversorgungssystem 22 aus einem Reservoir 37 findet vorliegend über die Stirnräder 15 und 16 der Stirnradstufe 6 statt, die hierzu nach Art einer Außenzahnradpumpe fungieren. So taucht das Stirnrad 15 mit seiner Verzahnung in das im Reservoir 37 stehende Schmiermittel ein und fördert dieses in der Folge zu dem Zahneingriff mit dem Stirnrad 16.

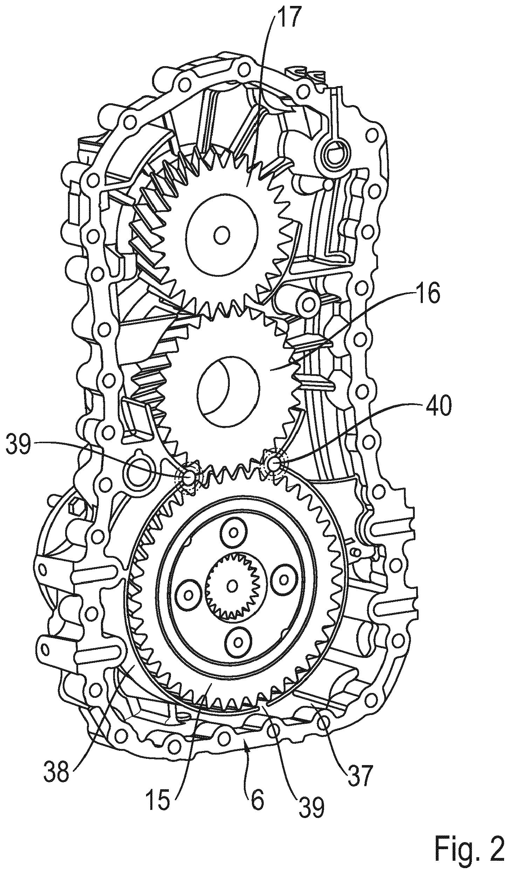

Wie in Zusammenschau mit Fig. 2 zu erkennen ist, welche eine Schnittansicht des Getriebes 1 im Bereich der Stirnradstufe 6 zeigt, ist das Stirnrad 15 dabei nahezu vollständig von einem Gehäuseteil 38 umgeben, wobei dieser Gehäuseteil 38 lediglich im Bereich des Reservoir 37 mit einem Durchbruch 39 unterbrochen sowie im Bereich des Zahneingriff mit dem Stirnrad 16 geöffnet ist. Im Bereich des Zahneingriffs mit dem Stirnrad 16 umgibt der Gehäuseteil 38 ferner auch das Stirnrad 16 ungefähr bis zu dessen Hälfte. Die Einhausung mit dem Gehäuseteil 38 hat dabei zur Folge, dass Schmiermittel aus dem Reservoir 37 über den Durchbruch 39 zwischen Gehäuseteil 38 und Stirnrad 15 gelangen kann und durch dieses in Folge von dessen Drehbewegung mit bis in den Bereich des Zahneingriff mit dem Stirnrad 16 gefördert wird. Aufgrund der Tatsache, dass der Gehäuseteil 38 in diesem Bereich auch das Stirnrad 16 umgibt, verdrängen die Stirnräder 15 und 16 im Bereich ihres Zahneingriffs dann das Schmiermittel nach Art einer Außenzahnradpumpe.

Beidseitig des Zahneingriff der Stirnräder 15 und 16 sind nun Förderkanäle 39 und 40 vorgesehen, wobei die gegensinnig rotierenden Stirnräder 15 und 16 je nach Drehrichtung das Schmiermittel entweder in den Förderkanal 39 oder in den Förderkanal 40 verdrängen. Seitens des Schmiermittelversorgungssystems 22 sind die Förderkanäle 39 und 40 über Rückschlagventile 41 und 42 jeweils an den Hauptkanal 23 angebunden, so dass das in den jeweiligen Förderkanal 39 oder 40 verdrängte Schmiermittel über das jeweilige Rückschlagventil 41 bzw. 42 zwar in den Hauptkanal 23 gelangen kann, über das jeweils andere Rückschlagventil 42 bzw. 41 aber ein Rückströmen in den jeweils anderen Förderkanal 40 oder 39 unterbunden wird. In der Folge kann bei beiden möglichen Drehrichtungen der Stirnräder 15 und 16 trotzdem jeweils eine zuverlässige Förderung von Schmiermittel in das Schmiermittelversorgungssystem 22 bewerkstelligt werden.

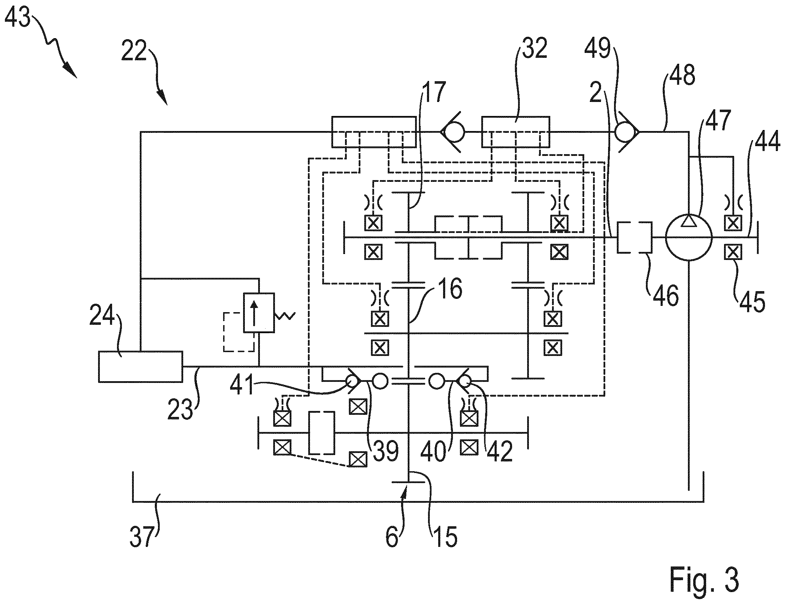

Schließlich zeigt noch Fig. 3 eine schematische Ansicht eines Getriebes 43 entsprechend einer zweiten Ausgestaltungsmöglichkeit der Erfindung, wobei diese im Wesentlichen der vorhergehenden Variante nach den Fig. 1 und 2 entspricht. Einziger Unterschied ist dabei, dass das Getriebe 43 nun noch eine weitere Welle 44 in Form eines Nebenabtriebs aufweist, die über eine Lagerstelle 45 drehbar gelagert ist und über eine Kupplung 46 drehfest mit der Welle 2 verbunden werden kann. Über die Welle 44 wird dabei eine Pumpe 47 angetrieben, über die ebenfalls Schmiermittel aus dem Reservoir gefördert wird. Dabei fördert die Pumpe 47 in eine Leitung 48, welche über ein Rückschlagventil 49 mit dem Verteiler 32 in Verbindung steht. Ansonsten entspricht die Ausführungsform nach Fig. 3 der Variante nach den Fig. 1 und 2, so dass auf das hierzu Beschriebene Bezug genommen wird.

Mittels der erfindungsgemäßen Ausgestaltungen eines Getriebes kann eine Schmiermittelversorgung auf zuverlässige Art und Weise realisiert werden.

### Bezugszeichen

- 1: Getriebe
- 2: Welle
- 3: Welle
- 4: Welle
- 5: Welle
- 6: Stirnradstufe
- 7: Stirnradstufe
- 8: Lagerstelle
- 9: Lagerstelle
- 10: Lagerstelle
- 11: Lagerstelle
- 12: Lagerstelle
- 13: Lagerstelle
- 14: Lagerstelle
- 15: Stirnrad
- 16: Stirnrad
- 17: Stirnrad
- 18: Schaltelement
- 19: Stirnrad
- 20: Stirnrad
- 21: Schaltelement
- 22: Schmiermittelversorgungssystem
- 23: Hauptkanal
- 24: Kühler
- 25: Verteiler
- 26: Versorgungsleitung
- 27: Versorgungsleitung
- 28: Versorgungsleitung
- 29: Versorgungsleitung
- 30: Überdruckventil
- 31: Verbindungsleitung
- 32: Verteiler
- 33: Versorgungsleitung
- 34: Versorgungsleitung
- 35: Versorgungsleitung
- 36: Rückschlagventil
- 37: Reservoir
- 38: Gehäuseteil
- 39: Förderkanal
- 40: Förderkanal
- 41: Rückschlagventil
- 42: Rückschlagventil
- 43: Getriebe
- 44: Welle
- 45: Lagerstelle
- 46: Kupplung
- 47: Pumpe
- 48: Leitung
- 49: Rückschlagventil

## Patentansprüche

1. Getriebe (1; 43), insbesondere Kraftfahrzeuggetriebe, umfassend zumindest eine Stirnradstufe (6), bei welcher Stirnräder (15, 16, 17) an Verzahnungen miteinander im Zahneingriff stehen, wobei eines der Stirnräder (15) bei Drehbewegung an seiner Verzahnung Schmiermittel aufnimmt und zu dem Zahneingriff mit dem anderen Stirnrad (16) transportiert, und wobei die Stirnräder (15, 16) bei Drehbewegung das Schmiermittel durch den Zahneingriff in ein Schmiermittelversorgungssystem (22) verdrängen, **dadurch gekennzeichnet, dass** beidseitig des Zahneingriffs Förderkanäle (39, 40) des Schmiermittelversorgungssystems (22) vorgesehen sind, und dass die Stirnräder (15, 16) das Schmiermittel drehrichtungsabhängig in je einen der Förderkanäle (39; 40) verdrängen.

2. Getriebe (1; 43) nach Anspruch 1, **dadurch gekennzeichnet, dass** die Förderkanäle (39, 40) in einem Hauptkanal (23) des Schmiermittelversorgungssystems (22) zusammenlaufen.

3. Getriebe (1; 43) nach Anspruch 2, **dadurch gekennzeichnet, dass** zwischen dem jeweiligen Förderkanal (39, 40) und dem Hauptkanal (23) je ein Rückschlagventil (41, 42) vorgesehen ist, welches ein Strömen des Schmiermittels aus dem jeweiligen Förderkanal (39, 40) in den Hauptkanal (23) zulässt und ein Rückströmen des Schmiermittels aus dem Hauptkanal (23) in den jeweiligen Förderkanal (39, 40) unterbindet.

4. Getriebe (1; 43) nach Anspruch 2 oder 3, **dadurch gekennzeichnet, dass** der Hauptkanal (23) zu einem Verteiler (25) des Schmiermittelversorgungssystems (22) führt, welcher über je eine Versorgungsleitung (26, 27, 28, 29) mit zumindest einer zugeordneten, mit Schmiermittel zu versorgenden Komponente verbunden ist.

5. Getriebe (1; 43) nach Anspruch 4, **dadurch gekennzeichnet, dass** der Verteiler (25) innerhalb des Schmiermittelversorgungssystems (22) mit einem weiteren Verteiler (32) verbunden ist, welcher über je eine Versorgungsleitung (33, 34, 35) mit mindestens einer zugeordneten, mit Schmiermittel zu versorgenden Komponente verbunden ist.

6. Getriebe (1; 43) nach einem der vorhergehenden Ansprüche, **dadurch gekennzeichnet, dass** das das Schmiermittel aufnehmende Stirnrad (15) mit seiner Verzahnung in ein Schmiermittelreservoir (37) eintaucht.

7. Getriebe (1; 43) nach einem der vorhergehenden Ansprüche, **dadurch gekennzeichnet, dass** die Stirnradstufe (6) zumindest im Bereich des Zahneingriffs eingehaust ist.

8. Getriebe (1; 43) nach einem der vorhergehenden Ansprüche, **dadurch gekennzeichnet, dass** die Stirnräder (15, 16, 17) mit Schrägverzahnungen versehen sind.

9. Antriebsstrang, insbesondere Kraftfahrzeugantriebsstrang, umfassend ein Getriebe (1; 43) nach einem der Ansprüche 1 bis 8.
